# EUROPÄISCHE PATENTSCHRIFT

(11) **EP 3 218 744 B1**
(45) Veröffentlichungstag und Bekanntmachung des Hinweises auf die Patenterteilung: **17.07.2019**
(21) Anmeldenummer: 15794116.2
(22) Anmeldetag: 04.11.2015
(51) Int. Cl.: G01T 1/29

(54) **ORTUNGSGERÄT FÜR RADIOAKTIVE STRAHLENQUELLEN**
POSITIONING DEVICE FOR RADIOACTIVE RADIATION SOURCES
DISPOSITIF DE LOCALISATION POUR SOURCES RADIOACTIVES

(30) Priorität: 11.11.2014 DE 102014116391
(43) Veröffentlichungstag der Anmeldung: 20.09.2017
(73) Patentinhaber: GSI Helmholtzzentrum für Schwerionenforschung GmbH, 64291 Darmstadt (DE)
(72) Erfinder: HOISCHEN, Robert, Lower Hutt 5011 (NZ)
(86) Internationale Anmeldenummer: PCT/EP2015/075689
(87) Internationale Veröffentlichungsnummer: WO 2016/075008

(56) Entgegenhaltungen:
- GB-A- 2 440 588
- US-A1- 2013 013 280
- US-B2- 7 994 482
- US-B2- 8 067 742

## Beschreibung

Die Erfindung betrifft eine Richtungsbestimmungsvorrichtung zur Bestimmung der Richtung einer Strahlungsquelle ionisierender Strahlung relativ zur Richtungsbestimmungsvorrichtung. Weiterhin betrifft die Erfindung ein Verfahren zur Bestimmung der Richtung einer Strahlungsquelle ionisierender Strahlung relativ zu einer Richtungsbestimmungsvorrichtung.

In den letzten Jahren hat sich ein zunehmender Bedarf an Geräten ergeben, mit denen nicht nur das Vorhandensein von radioaktiven Quellen erkannt werden kann, sondern mit denen auch auf möglichst einfache und schnelle Weise die Richtung, in der sich die erkannte Strahlenquelle befindet, ermittelt werden kann.

Beispiele hierfür sind der Rückbau technischer Anlagen, bei denen Radioaktivität verwendet wurde, wo es häufig erforderlich ist, ein freizugebendes (vermeintlich) geräumtes Gelände dahingehend zu überprüfen, ob tatsächlich sämtliche radioaktiven Strahlungsherde entfernt wurden. Sollten noch eine bzw. mehrere radioaktive Quellen verblieben sein, so ist es naturgemäß wünschenswert, dass diese möglichst schnell lokalisiert werden können. Dies erhöht einerseits die Geschwindigkeit der Räumung, andererseits wird hierdurch auch eine Strahlenexposition der betreffenden Personen verringert.

Ein weiteres Einsatzgebiet betrifft den Katastrophenschutz bzw. Helfer (beispielsweise Feuerwehr) bei Unfällen. Auch hier geht es darum, nach möglichst kurzer Zeit nicht nur das eventuelle Vorhandensein von radioaktiven Quellen zu erkennen, sondern auch darum, deren Position möglichst rasch bestimmen zu können. Bei derartigen Anwendungen ist ein besonders rasches Erkennen oftmals noch wichtiger, als es in den vorab beschriebenen Anwendungsfällen der Fall ist. Insbesondere kann durch ein besonders schnelles Lokalisieren eventuell vorhandener radioaktiver Quellen eine ungewollte Ausbreitung des Materials verhindert werden. Darüber hinaus ist beispielsweise beim Vorhandensein eines Brandes das Zeitfenster zum Betreten der Unglücksstelle oftmals besonders klein. Ein weiteres Einsatzgebiet besteht weiterhin im hoheitlichen Bereich, wie beispielsweise bei der Arbeit von Sicherheitsbehörden (zum Teil auch unter dem Begriff "Homeland Security" bekannt). Auch hier ist ein rasches Erkennen und Aufspüren von eventuell vorhandenen radioaktiven Quellen besonders wichtig, da erst dadurch eine routinemäßige Massenüberprüfung möglich wird (sogenanntes "Screening").

Es verwundert daher nicht, dass bereits einige Vorschläge zur Lösung der genannten Probleme gemacht wurden.

Beispielsweise wurde im US-Patent US 7,994,482 B2 eine Detektoranordnung vorgeschlagen, mit der die Richtung einer Gamma- und/oder einer Neutronenstrahlungsquelle ermittelt werden kann. Hierzu dient eine Mehrzahl an Detektorvorrichtungen, die beispielsweise kreuzartig angeordnet sind, um einen großen Winkelbereich messen zu können. Bei der dortigen Vorrichtung wird vorgeschlagen, dass jeweils zwei Detektormaterialien sandwichartig benachbart zueinander angeordnet sind (nach Art zweier, an ihrer größten Fläche miteinander kontaktierenden, quaderartigen Detektorblöcken), derart, dass aus dem Zählverhältnis der beiden aufeinanderliegenden Detektormaterialien auf die Seite, von der die ionisierende Strahlung herkommt, geschlossen werden kann. Durch die kreuzartige Anordnung unterschiedlicher Detektoreinrichtungen (zum Beispiel einem Detektorpaar), das in einem Winkel von 90° zueinander angeordnet wird, ist es möglich, die Richtung der Strahlungsquelle auf einen Winkel von 90° herunter zu brechen. Auch wenn die dort vorgeschlagene Anordnung funktionstüchtig ist, so besteht ein erheblicher Nachteil darin, dass keine genaue Richtungsmessung möglich ist. Ein weiterer Nachteil besteht darin, dass die Zählraten der übereinanderliegenden Detektorelemente einen signifikanten Unterschied zueinander aufweisen müssen. Dies ist in der Praxis nur dann möglich, wenn bestimmte, insbesondere dichte Szintillatormaterialien genutzt werden oder wenn eine abschirmende Schicht zwischen den beiden Detektorbereichen angeordnet wird. Beides führt zu Nachteilen, wie beispielsweise einer nur eingeschränkten Verwendbarkeit von Szintillatormaterialien oder einem zusätzlichen Gewicht der Anordnung, was diese oftmals nicht mehr für portable Anwendungen geeignet macht.

Im US-Patent US 8,067,742 B2 ist eine weitere Vorrichtung zur Bestimmung der Position (Azimutwinkel) einer Gammaquelle beschrieben. Bei der dort beschriebenen Vorrichtung werden zwei längliche Szintillationskristalle in einem Winkel zueinander angeordnet. Die von den Szintillationskristallen durch einfallende Gammastrahlung generierten Lichtimpulse werden durch Photodetektoren, welche jeweils an einer Seite der Szintillationskristalle angeordnet sind, verstärkt und die somit gewonnenen Zählraten ausgewertet. Aus einem Vergleich der Zählraten der beiden Szintillationsdetektoren (aufgrund der unterschiedlichen Winkellage zueinander weisen diese in Abhängigkeit von ihrer Ausrichtung relativ zur Gammaquelle unterschiedliche Zählraten auf) kann auf die Richtung der Gammaquelle geschlossen werden. Zur weiteren Erhöhung der Genauigkeit können auch weitere Szintillationsdetektoren genutzt werden. Im US-Patent wird eine Genauigkeit von bis zu 5° Lagegenauigkeit der Gammaquelle angegeben. Ein Nachteil bei dem dort beschriebenen Aufbau ist, dass die dort jeweils verwendeten Szintillationskristalle eine Symmetrie bei einem Winkelversatz (also Drehen) nach links bzw. nach rechts (ausgehend von einem Minimum bzw. Maximum) aufweisen. Von daher können zwar Lagewinkel recht genau bestimmt werden; eine Aussage darüber, ob sich die Strahlungsquelle rechts oder links (bzw. vor oder hinter und/oder oberhalb oder unterhalb) der Messapparatur befindet ist jedoch nicht möglich. Diese Messcharakteristik ist nachteilig, wobei die resultierenden Nachteile bis hin zu einer de facto-nicht Verwendbarkeit der Vorrichtung, zumindest für manche Anwendungen, reichen. In jedem Fall geht aufgrund der Nachteile (zumindest mit einer gewissen statistischen Wahrscheinlichkeit) eine signifikante Erhöhung der Messdauer einher, da es in der Regel erforderlich ist, beispielsweise die fehlende links-rechts-Auflösung anderweitig zu "simulieren", wie beispielsweise durch eine Erhöhung oder Erniedrigung der Gesamtzählrate aufgrund einer Annäherung bzw. Entfernung von der betreffenden Strahlungsquelle.

Es ist daher offensichtlich, dass nach wie vor ein Bedarf an verbesserten Richtungsbestimmungsvorrichtungen zur Bestimmung der Richtung einer Strahlungsquelle ionisierender Strahlung relativ zur Richtungsbestimmungsvorrichtung bzw. an geeigneten entsprechenden Messverfahren besteht.

Dementsprechend besteht die Aufgabe der Erfindung darin, eine Richtungsbestimmungsvorrichtung zur Bestimmung der Richtung einer Strahlungsquelle ionisierender Strahlung relativ zur Richtungsbestimmungsvorrichtung vorzuschlagen, die gegenüber im Stand der Technik bekannten Richtungsbestimmungsvorrichtungen verbessert ist. Eine weitere Aufgabe der Erfindung besteht darin, ein Verfahren zur Bestimmung der Richtung einer Strahlungsquelle ionisierender Strahlung relativ zu einer Richtungsbestimmungsvorrichtung vorzuschlagen, welches gegenüber im Stand der Technik bekannten Verfahren zur Bestimmung der Richtung einer Strahlungsquelle ionisierender Strahlung relativ zu einer Richtungsbestimmungsvorrichtung verbessert ist. Besondere bevorzugte Aufgaben der Erfindung bestehen darin, eine möglichst leichte und portable Vorrichtung vorzuschlagen; ein Verfahren vorzuschlagen, welches vorteilhaft auf einer besonders leichten und portablen Vorrichtung ausgeführt werden kann; eine Vorrichtung bzw. ein Verfahren vorzuschlagen, welches eine möglichst genaue und rasche Lokalisierung einer Strahlungsquelle, insbesondere unter Vermeidung von anfänglichen Vieldeutigkeiten, ermöglicht.

Die vorliegende Erfindung löst diese Aufgabe(n).

Es wird vorgeschlagen, eine Richtungsbestimmungsvorrichtung gemäß Anspruch 1 zur Bestimmung der Richtung einer Strahlungsquelle ionisierender Strahlung relativ zur Richtungsbestimmungsvorrichtung, weiche zumindest zwei Strahlungsdetektionsvorrichtungen mit länglich ausgebildetem Detektionsvolumen aufweist, und bei welcher die zumindest zwei Strahlungsdetektionsvorrichtungen in einem Winkel zueinander angeordnet sind, derart auszubilden, dass zumindest eine erste Strahlungsdetektionsvorrichtung als symmetrisch-winkelabhängige Strahlungsdetektionsvorrichtung und zumindest eine zweite Strahlungsdetektionsvorrichtung als symmetriebrechend-winkelabhängige Strahlungsdetektionsvorrichtung ausgebildet ist. Hierdurch ist es auf verblüffend einfache Weise möglich, dass einerseits eine hohe Winkelauflösung bei gleichzeitig möglichst geringem Gewicht (und üblicherweise auch reduziertem Energieverbrauch) im Verhältnis zu Vorrichtungen gemäß dem Stand der Technik erzielbar ist, ohne dass die beschriebenen, nachteiligen Effekte bezüglich der "Uneindeutigkeit" der Richtung (insbesondere links-rechts-Richtung) auftreten, bzw. in vollem Umfang auftreten. Es ist darauf hinzuweisen, dass eine symmetrisch-winkelabhängige Strahlungsdetektionsvorrichtung üblicherweise ungefähr die Hälfte des Gewichts einer symmetriebrechend-winkelabhängigen Strahlungsdetektionsvorrichtung aufweist (bei im Wesentlichen gleicher Auflösungsgenauigkeit). Auch der Energieverbrauch beträgt (bei im Wesentlichen gleicher Genauigkeit) bei symmetrisch-winkelabhängigen Strahlungsdetektionsvorrichtungen oftmals lediglich annähernd die Hälfte des Energieverbrauchs von symmetriebrechend-winkelabhängigen Strahlungsdetektionsvorrichtungen. Dementsprechend ist es mit der vorgeschlagenen Vorrichtung auf verblüffend einfache Weise möglich, bei im Wesentlichen gleicher Ortsauflösung eine zumindest erhebliche Reduktion des Gewichts und des Energieverbrauchs zu realisieren. Weiterhin ist es möglich, die vorgeschlagene Vorrichtung dahingehend weiter zu optimieren, dass beispielsweise die Richtungsgenauigkeit der Richtungsbestimmungsvorrichtung deutlich erhöht wird, ohne "unnötig viel Gewicht" (bzw. "unnötig hohen Energieverbrauch") zu generieren, beispielsweise dadurch, dass zusätzliche symmetrisch-winkelabhängige Strahlungsdetektionsvorrichtungen vorgesehen werden (bei gleichbleibender Anzahl an symmetriebrechend-winkelabhängigen Strahlungsdetektionsvorrichtungen). Eine weitere Möglichkeit einer Verbesserung der Gesamtvorrichtung besteht insbesondere auch dahingehend, dass es möglich ist, beispielsweise Größe und/oder Energieverbrauch der symmetriebrechend-winkelabhängigen Strahlungsdetektionsvorrichtung(en) auf das "unbedingt notwendige Ausmaß" zu verringern. Rein beispielhaft ist dies dadurch möglich, dass eine "kleine" symmetriebrechend-winkelabhängige Strahlungsdetektionsvorrichtung verwendet wird, bei der die Winkelabhängigkeit nur noch in einem vergleichsweise geringen Maße ausgeprägt ist. Eine weitere, oftmals besonders sinnvolle Ausbildungsmöglichkeit ist, dass die symmetriebrechend-winkelabhängige Strahlungsdetektionsvorrichtung zwar gute Ergebnisse sowohl hinsichtlich einer Symmetriebrechung als auch einer Winkelabhängigkeit zeigt, aber dennoch beispielsweise energieverbrauchsoptimiert bzw. gewichtsoptimiert ausgebildet ist. Dies ist beispielsweise dadurch denkbar, dass die symmetriebrechend-winkelabhängige Strahlungsdetektionsvorrichtung unterschiedlich große länglich ausgebildete Detektionsvolumen aufweist. Mit anderen Worten kann eines der Detektorvolumen eine "Standardlänge" analog zu einer symmetrisch-winkelabhängige in Strahlungsdetektionsvorrichtung aufweisen, während das "parallel angeordnete Detektorvolumendoppel" eine verkürzte Länge aufweist. Unter einer länglich ausgebildeten Form ist im Rahmen dieser Anmeldung insbesondere eine Form zu verstehen, bei der eine Längenausdehnung größer ist als die (typische) Querschnittsausdehnung der Form. Beispiele hierfür sind beispielsweise quaderartige Formen (mit quadratischer und/oder rechteckiger Querschnittsfläche), stangenartige Formen (mit kreisrunder, ellipsenartiger, ovaler oder sonstiger Querschnittsfläche) und dergleichen. Auch Formen mit nicht-homogener Querschnittsfläche sind selbstverständlich denkbar. In diesem Zusammenhang ist beispielsweise an (gestreckte) pyramidenartige, tetraederartige, rotationsellipsoidale und dergleichen Formen zu denken. Selbstverständlich sind auch Formen (insbesondere mit im Wesentlichen über die Länge hinweg gleichartiger Querschnittsfläche) denkbar, bei denen an einem oder an beiden Enden Anfasungen oder dergleichen vorhanden sind. Der Begriff einer "symmetriebrechend-winkelabhängigen Strahlungsdetektionsvorrichtung" muss sich dabei nicht notwendigerweise auf die Anzahl des Vorhandenseins einer entsprechenden Baugruppe (eins, zwei, drei usw. Baugruppen) beschränken. Insbesondere kann der Begriff auch dahingehend verstanden werden, ob in einer entsprechenden Anzahl an (typischerweise orthogonal zueinander stehenden) Richtungen eine Seitenabhängigkeit der Winkeldetektion unterschieden werden kann ("Symmetriebruch"). So ist es beispielsweise möglich, dass eine speziell ausgebildete, einzelne Baugruppe vom "symmetriebrechend-winkelabhängigen Typ" eine symmetriebrechende Unterscheidung in zwei zueinander senkrechten Richtungen zulässt (beispielsweise "vorne - hinten" sowie "links - rechts"). Es soll daher möglich sein, eine derartige Baugruppe als "eine symmetriebrechend-winkelabhängige Strahlungsdetektionsvorrichtung" aufzufassen (da lediglich eine einzelne, entsprechende Baugruppe vorliegt). Ebenso soll es aber auch möglich sein, eine derartige Baugruppe als "zwei symmetriebrechend-winkelabhängige Strahlungsdetektionsvorrichtungen" aufzufassen, da die Baugruppe zwei zueinander orthogonale Richtungen hinsichtlich ihrer Ausrichtung (Symmetriebruch) unterscheiden kann (obgleich lediglich eine einzelne Baugruppe vorliegt). Entsprechende Verallgemeinerungen sind ebenfalls möglich (beispielsweise beim Vorhandensein einer Baugruppe, die drei zueinander orthogonal stehende Richtungen "symmetriebrechend voneinander unterscheiden" kann).

Unter einer symmetrisch-winkelabhängigen Strahlungsdetektionsvorrichtung sind insbesondere Strahlungsdetektionsvorrichtungen zu verstehen, die zwar eine Winkelabhängigkeit zeigen, wenn diese hinsichtlich ihres Ausrichtungswinkels relativ zur Strahlungsquelle (zumindest in manchen Richtungen) eine Winkelabhängigkeit zeigen, die Winkelabhängigkeit allerdings zumindest zu einem gewissen Teil mit einer bestimmten Symmetrie erfolgt (sodass typischerweise gewisse Vieldeutigkeiten resultieren). Wenn man rein beispielhaft einen stangenartigen Detektor, verwendet und die "kleine" Querschnittsfläche in Richtung einer Strahlungsquelle ausrichtet, so ist die Zählrate im Detektionsvolumen (beispielsweise gefüllt mit einem Szintillatormaterial) minimal. Dreht man die Detektorvorrichtung von der Minimalstellung weg, so steigt die Zählrate, bis sich in einer 90°-Stellung zur Strahlungsquelle ein Maximum ergibt. Insofern ist eine Winkelabhängigkeit gegeben. Die Zählrate ist jedoch (im Wesentlichen) gleich, unabhängig davon, in welche Richtung die Auslenkung aus dem Minimum (entsprechend auch aus dem Maximum) heraus erfolgt (zumindest in manchen Richtungen). Dementsprechend bestehen zumindest gewisse Symmetrien. Aufgrund der Kombination dieser Messcharakteristika wird daher im Rahmen dieser Anmeldung bei derartigen Detektorvorrichtungen von symmetrisch-winkelabhängigen Strahlungsdetektionsvorrichtungen gesprochen. Demgegenüber zeigen symmetriebrechend-winkelabhängige Strahlungsdetektionsvorrichtungen keine Symmetrien (zumindest in manchen Richtungen, insbesondere in zumindest einer Richtung). Die Effekte zur Winkelabhängigkeit entsprechen dagegen üblicherweise (bis zu einem gewissen Grad) den oben genannten Ausführungen, insbesondere wenn man deren Gesamtzählrate betrachtet. Somit wird bei derartigen Elementen im Rahmen der vorliegenden Anmeldung von "symmetriebrechend-winkelabhängigen Strahlungsdetektionsvorrichtungen" gesprochen. Wie bereits angedeutet, kann sich der Bruch der Symmetrie lediglich auf bestimmte Richtungen beziehen, wie beispielsweise auf einen Symmetriebruch (gegebenenfalls nur in einer Richtung) in einer horizontalen Ebene und/oder auf einen Symmetriebruch bei einer Drehbewegung der symmetriebrechend-winkelabhängigen Strahlungsdetektionsvorrichtung nach links oder nach rechts (Rotationsachse senkrecht zum Erdboden) oder dergleichen. Dagegen können in anderen Richtungen durchaus nach wie vor Symmetrien vorhanden sein. Um beim genannten Beispiel zu bleiben, ist es beispielsweise möglich, dass nach wie vor eine Symmetrie nach oben oder nach unten besteht, obwohl es sich "eigentlich" um eine symmetriebrechend-winkelabhängige Strahlungsdetektionsvorrichtung handelt. Obgleich es möglich ist, durch eine entsprechende Ausbildung der symmetriebrechend-winkelabhängigen Detektionsvorrichtungen und/oder durch Vorsehen zusätzlicher symmetriebrechend-winkelabhängiger Detektionsvorrichtungen auch derartige Vieldeutigkeiten zu beseitigen, wird darauf hingewiesen, dass oftmals eine oben-unten-Richtungssymmetrie und/oder eine vorne-hinten-Richtungssymmetrie keinen (signifikanten) Nachteil darstellt. Geht es beispielsweise um die Freigabe geräumter Flächen, so ist kaum davon auszugehen, dass eine radioaktive Strahlungsquelle unbemerkt und feststehend oberhalb des Erdbodens "in der Luft fliegt". Hinsichtlich einer (fehlenden) "vorne - hinten"-Unterscheidungsmöglichkeit ist darauf hinzuweisen, dass eine Messung bei vielen Einsatzgebieten ausgehend von einem "sauberen" (also nicht radioaktiv kontaminierten) Gebiet in ein (potentiell) kontaminiertes Gebiet hinein erfolgt. Dann kann man jedoch davon ausgehen, dass sich Strahlungsquellen "anfänglich" vor dem Gerät befinden. Dementsprechend kann dieser Nachteil zumindest bei einigen Anwendungsbereichen in Kauf genommen werden, insbesondere da dadurch in der Regel eine Gewichtsreduktion und/oder ein geringerer Energieverbrauch der Vorrichtung einhergehen kann, der die genannten Nachteile oftmals deutlich überkompensiert. Im Übrigen kann insbesondere in diesem Zusammenhang (Unterscheidung vorne - hinten) noch ein Effekt genutzt werden, der insbesondere bei portablen Vorrichtungen auftreten kann (fachsprachlich zum Teil als "Dreckeffekt" bezeichnet). Dieser beruht darauf, dass die das Gerät benutzende Person selbst einen bestimmten Absorptionsquerschnitt gegenüber der ionisierenden Strahlung aufweist. Dementsprechend liegt in Bezug auf vorne - hinten eine gewisse Asymmetrie bei der Strahlungsdetektion - und damit eine Symmetriebrechung vor, obgleich in dieser Richtung keine gesonderte symmetriebrechend-winkelabhängige Strahlungsdetektionsvorrichtung vorgesehen ist. Eine Unterscheidung "vorne - hinten" kann gewissermaßen durch eine "Drehung um die Hochachse" durch den Benutzer und entsprechendes "Mitprotokollieren der Messung in Abhängigkeit vom Winkel" realisiert werden. In diesem Zusammenhang sollte erwähnt werden, dass die "messende Person" trotz ihrer "Richtungswirkung" (auch im Zusammenhang mit einer symmetrish-winkelabhängigen Detektionsvorrichtung") typischerweise nicht als "symmetriebrechend-winkelabhängige Detektionsvorrichtung" gewertet werden soll.

Weiterhin wird vorgeschlagen, eine Richtungsbestimmungsvorrichtung zur Bestimmung der Richtung einer Strahlungsquelle ionisierender Strahlung relativ zur Richtungsbestimmungsvorrichtung, welche zumindest zwei Strahlungsdetektionsvorrichtungen mit länglich ausgebildeten Detektionsvolumen aufweist, wobei zumindest zwei Strahlungsdetektionsvorrichtungen in einem Winkel zueinander angeordnet sind, zusätzlich zum vorigen Vorschlag dahingehend auszubilden, dass die zumindest zwei Strahlungsdetektionsvorrichtungen winkelvariabel zueinander angeordnet sind. Insbesondere soll es möglich sein, dass diese manuell verstellbar und/oder automatisch verstellbar ausgeführt sind. Hierdurch ist es möglich, das nutzbare Gesichtsfeld einerseits und die Genauigkeit der Richtungsbestimmung andererseits geeignet einzustellen. Es ist darauf hinzuweisen, dass (zumindest bei einfachen Aufbauten) typischerweise eine Erhöhung des Gesichtsfelds mit einer Verringerung der Winkelauflösung einhergeht (und umgekehrt). Grundsätzlich ist es zwar möglich, dass beide Ziele "auch gleichzeitig erzielt werden können" - dies hat jedoch typischerweise einen deutlich komplexeren Aufbau zur Folge, was oftmals mit einem entsprechend erhöhten Gewicht und erhöhtem Energieverbrauch einhergeht (und darüber hinaus die Kosten für die Vorrichtung ansteigen lässt). Mit der vorgeschlagenen Winkelvariation ist es dagegen möglich, dass auch einfach aufgebaute (und dementsprechend meist leichte, kostengünstige und energieverbrauchsarme) Vorrichtungen realisiert werden können, welche sowohl ein großes Gesichtsfeld, als auch eine genaue Richtungsbestimmbarkeit zeigen (wenn auch nicht gleichzeitig). Diese Aussage ist insbesondere als relative Genauigkeitsaussage in Abhängigkeit von unterschiedlichen Winkelstellungen zu verstehen. Vergleicht man die vorliegend vorgeschlagene Vorrichtung mit Vorrichtungen nach dem Stand der Technik, ergibt sich typischerweise auch bei "ungünstigen Winkelstellungen" eine deutliche Genauigkeitssteigerung. So wird es beispielsweise möglich, in einer ersten Messung einen großen Winkelbereich "grob zu scannen", wobei man eine erste Aussage über die Richtung der (so sie denn vorhanden ist) Strahlungsquelle erhält. Mit dieser Information wird dann gegebenenfalls die Richtungsbestimmungsvorrichtung neu ausgerichtet und der Winkel der Strahlungsdetektionsvorrichtungen (insbesondere relativ zueinander) variiert, sodass nunmehr eine deutlich höhere Winkel-Messgenauigkeit realisiert (werden kann). Dennoch kann insbesondere eine portable Ausführung der Vorrichtung nach wie vor realisiert werden. Die Umstellung kann beispielsweise manuell erfolgen (gegebenenfalls auch nach einem entsprechenden Kommando einer Anzeigevorrichtung oder dergleichen) oder es kann auch eine automatisierte Ansteuerung, beispielsweise durch eine Datenverarbeitungsvorrichtung (Controller), erfolgen. Die Verstellbarkeit (manuell/automatisch) kann dabei in beliebiger Weise und je nach Erfordernis im Wesentlichen kontinuierlich erfolgen (innerhalb gewisser Grenzen) oder aber auch stufenweise (im Extremfall nur zwei Winkelstellungen). Sind mehr als zwei Strahlungsdetektionsvorrichtungen (zum Teil auch vereinfacht als "Detektionsvorrichtung" oder als "Detektorvorrichtung" bezeichnet) vorhanden, so ist der Verstellmechanismus vorzugsweise derart ausgeführt, dass sämtliche Winkelvariationen durch einen einzelnen Verstellvorgang erfolgen. Hierdurch kann die Bedienerfreundlichkeit, aber auch die Messgeschwindigkeit, erhöht werden. Gegebenenfalls ist es auch möglich, dass zumindest manche der Winkelvariationen durch gesonderte Handhabungsvorgänge realisiert werden. Dies ist einerseits denkbar, um beispielsweise besonders komplexe Aufbauten zu vermeiden, andererseits aber auch als Rückfallposition einer "gleichzeitigen Verstellbarkeit", sollte beispielsweise bei einem Feldeinsatz die entsprechende Mechanik einen Defekt aufweisen. In einem solchen Falle ist zwar ein verschlechterter Betrieb gegeben; aber dennoch kann die Vorrichtung mit im Endergebnis mehr oder weniger vollem Funktionsumfang weiterbetrieben werden. Gerade bei Unglücksfällen und Katastrophenfällen kann sich eine derartige Funktionalität als besonders vorteilhaft erweisen.

Weiterhin wird vorgeschlagen die Richtungsbestimmungsvorrichtung derart auszubilden, dass genau zwei symmetrisch-winkelabhängige Strahlungsdetektionsvorrichtungen und/oder genau eine oder zwei symmetriebrechend-winkelabhängige Strahlungsdetektionsvorrichtungen vorhanden sind, insbesondere pro Detektionsebene. Erste Versuche haben gezeigt, dass mit einem derartigen Aufbau ein besonders guter Kompromiss zwischen den oftmals erforderlichen (relevanten) Geräteeigenschaften möglich wird. Insbesondere können durch die genau zwei symmetrisch-winkelabhängigen Strahlungsdetektionsvorrichtungen bereits sehr genaue Richtungsangaben gemacht werden, bei gleichzeitig sehr geringem Materialaufwand und typischerweise geringem Gewichtsaufwand und/oder Energieverbrauch. Durch das Vorhandensein von einer oder zwei symmetriebrechend-winkelabhängig ausgebildeten Strahlungsdetektionsvorrichtungen können die durch die symmetrisch-winkelabhängige Strahlungsdetektionsvorrichtung(en) verbleibenden Vieldeutigkeiten aufgelöst werden, sofern diese für die entsprechende Messaufgabe relevant sind. Die Winkelabhängigkeit der symmetriebrechend-winkelabhängigen Strahlungsdetektionsvorrichtung(en) kann dabei zu einer zusätzlichen Genauigkeit der Richtungsangabe verwendet werden (auch wenn die symmetriebrechend-winkelabhängige Strahlungsdetektionsvorrichtung nicht notwendigerweise die gleiche Aussagekraft hinsichtlich der Winkelabhängigkeit wie die symmetrisch-winkelabhängigen Strahlungsdetektionsvorrichtungen haben muss - obgleich sie diese natürlich auch aufweisen kann). Lediglich der Vollständigkeit halber wird darauf hingewiesen, dass selbstverständlich auch abweichende Zahlen an Strahlungsdetektionsvorrichtungen möglich sind (auch pro Detektionsebene), wie beispielsweise drei, vier, fünf, sechs, sieben, acht, neun oder zehn symmetrisch-winkelabhängige Strahlungsdetektionsvorrichtungen und/oder drei, vier, fünf, sechs, sieben oder acht symmetriebrechend-winkelabhängige Strahlungsdetektionsvorrichtungen (insbesondere jeweils pro Detektionsebene). Unter einer Detektionsebene kann vorliegend verstanden werden, dass beispielsweise nur eine Aussage über eine Position der Strahlungsquelle hinsichtlich eines Azimutwinkels möglich ist (Positionierung entlang einer Normalen zur Horizontalfläche oder dergleichen). Somit kann also beispielsweise zwar die Richtung der Strahlungsquelle ermittelt werden, nicht jedoch die Höhe derselben (zumindest nicht direkt und/oder ohne Bewegung (translatorisch und/oder Drehung) der Messvorrichtung und/oder ohne Beachtung der (Gesamt-) Zählraten der Detektorvorrichtungen). Eine derartige Aussagekraft ist - wie bereits erwähnt - für viele Messaufgaben völlig ausreichend, sodass sich eine einzige Detektionsebene "mit Aussagekraft" (einschließlich einer nur teilweisen Symmetriebrechung in unterschiedlichen Richtungen innerhalb der Detektionsebene) als ausreichend erweisen kann. Weiterhin können je nach Anforderungsprofil eine oder zwei symmetriebrechend-winkelabhängige Strahlungsdetektionsvorrichtungen vorgesehen werden (pro Detektionsebene). Beim Vorhandensein einer symmetriebrechend-winkelabhängigen Strahlungsdetektionsvorrichtung in einer "horizontalen Detektionsebene" kann beispielsweise (ohne Bewegung des Detektionsgeräts bzw. Teilen hiervon) lediglich eine Aussagekraft bezüglich "links oder rechts des Geräts" erfolgen, wohingegen eine Aussage "vorne - hinten" nicht erfolgen kann. Für viele Messaufgaben kann dies jedoch völlig ausreichend sein, da beispielsweise bei einer Freigabe von geräumten, einstmals "radioaktiv genutzten Flächen" davon ausgegangen werden kann, dass der Benutzer der Messvorrichtung aus einem "sauberen Gebiet" in das zu überprüfende Gebiet eintritt. Auch beispielsweise bei hoheitlichen Aufgaben im Rahmen von Zollkontrollen kann davon ausgegangen werden, dass gegebenenfalls vorhandene radioaktive Quellen stets vor dem Messgerät vorhanden sind (weil nur dort zu überprüfende Container, Fahrzeuge, Koffer und dergleichen positioniert werden). Möglich ist es im Übrigen aber auch, eine einzelne symmetriebrechend-winkelabhängige Strahlungsdetektionsvorrichtung vorzusehen (insbesondere pro Detektionsebene) und diese drehbar zu lagern, da auch hierdurch Vieldeutigkeiten aufgelöst werden können. Dies kann manuell und/oder automatisch erfolgen. Weiterhin wird der Vollständigkeit halber darauf hingewiesen, dass die gemachten Aussagen typischerweise nur für den Fall gelten, dass die Richtungsbestimmungsvorrichtung (bzw. Teile hiervon) sich in einer bestimmten Lage befindet, wobei die "korrespondierende Positionierung" dem Fachmann offensichtlich ist. Weiterhin wird darauf hingewiesen, dass für eine "vollständige dreidimensionale Symmetriebrechung" typischerweise insgesamt drei symmetriebrechende (symmetriebrechend-winkelvariable) Detektionsvorrichtungen ausreichend sind. Insbesondere in einem Fall, in dem zumindest zwei symmetrisch-winkelabhängige Detektionsvorrichtungen und zumindest eine symmetriebrechend-winkelabhängige Detektionsvorrichtung vorhanden sind, ist darauf hinzuweisen, dass die betreffenden Detektionsvorrichtungen (auch pro Detektionsebene) nicht unbedingt eine Winkelabhängigkeit in einer gleichen Richtung aufweisen müssen. Dies kann bei entsprechend ausgebildeten und angeordneten symmetriebrechend-winkelabhängigen Detektionsvorrichtungen von Vorteil sein, da beispielsweise eine links-rechts- mit gleichzeitiger vorne-hinten-Symmetriebrechung möglich ist. Die Winkelabhängigkeit differenziert dann oftmals zwischen oben und unten, was im Übrigen auch eine vorteilhafte Aussagekraft haben kann (auch falls hier keine Symmetriebrechung vorhanden sein sollte). Selbstverständlich ist es ebenso möglich, dass die Winkelabhängigkeit der symmetriebrechend-winkelabhängigen Detektionsvorrichtung die Winkelabhängigkeit der symmetrisch-winkelabhängigen Detektionsvorrichtungen "ergänzt" (also zumindest teilweise "in gleicher Richtung erfolgt"), sodass typischerweise die Messgenauigkeit der Winkelangabe erhöht werden kann.

Vorgeschlagen wird weiterhin, dass die Richtungsbestimmungsvorrichtung zumindest zwei symmetrisch-winkelabhängige Strahlungsdetektionsvorrichtungen aufweist, die symmetrisch, insbesondere spiegelsymmetrisch und/oder achsensymmetrisch und/oder punktsymmetrisch zu der zumindest einen symmetriebrechend-winkelabhängigen Strahlungsdetektionsvorrichtung angeordnet sind. Bei einer derartigen Positionierung erfolgt die Symmetriebrechung typischerweise in einer "besonders geeigneten Richtung" (beispielsweise rechtslinks), bei typischerweise gleichzeitiger vorteilhafter Erhöhung der Messgenauigkeit der Winkelbestimmung und/oder bei besonders einfachem mechanischen Aufbau.

Weiterhin wird vorgeschlagen, dass bei der Richtungsbestimmungsvorrichtung die symmetriebrechend-winkelabhängige Strahlungsdetektionsvorrichtung als Anordnung parallel zueinander angeordneter länglich ausgebildeter Detektionsvolumen ausgebildet ist, insbesondere von zwei oder vier parallel zueinander angeordneten länglich ausgebildeten Detektionsvolumen, welche insbesondere mittels zumindest einer Abschirmungseinrichtung strahlungstechnisch voneinander separiert sind. Mit einem derartigen Aufbau ergibt sich typischerweise eine besonders hohe Aussagekraft hinsichtlich der Symmetriebrechung und/oder hinsichtlich einer Verbesserung der Richtungsbestimmungsgenauigkeit. Insbesondere ist es möglich, dass die länglich ausgebildeten Detektionsvolumen (beispielsweise Szintillationskristalle) "sandwichartig" aufeinander gelagert sind. Bei entsprechenden Materialien (insbesondere hochdichte Szintillatormaterialien mit vergleichsweise stark dämpfender Wirkung auf die nachzuweisenden ionisierenden Strahlen) kann oftmals auch auf eine gesonderte Abschirmungseinrichtung verzichtet werden (beispielsweise eine Bleifolie, die zwischen den Szintillationskristallen angeordnet ist), da sich die Zählraten in den Teilbereichen ausreichend voneinander unterscheiden. Sollte diese Voraussetzung nicht gegeben sein (aber auch ansonsten), kann selbstverständlich eine Abschirmungseinrichtung vorgesehen werden, um den erwähnten Unterschied zwischen den Zählraten zu realisieren bzw. weiter zu erhöhen. "Strahlungstechnisch getrennt" bedeutet dabei nicht notwendigerweise eine mehr oder weniger "perfekte" Trennung. Vielmehr ist es üblicherweise ausreichend, wenn die jeweiligen Zählraten ausreichend voneinander abweichen, sodass diese (sinnvoll) weiterverwendet und/oder analysiert werden können, um sinnvolle Aussagen treffen zu können. Es wird darauf hingewiesen, dass speziell bei manchen Arten von ionisierender Strahlung (insbesondere bei Gammastrahlung) aufgrund der der Strahlung intrinsischen Eigenschaften realistischerweise keine "mehr oder weniger perfekte" Trennung erzielt werden kann. Trotz der gegebenenfalls vorhandenen strahlungstechnischen Trennung ist es meist bevorzugt, wenn die betreffenden Bauteile eine mechanische Einheit (Baugruppe) ausbilden. Wie bereits vorab erläutert, kann insbesondere eine geeignet ausgebildete Vorrichtung aus vier parallel zueinander angeordneten länglich ausgebildeten Detektionsvolumen (insbesondere, wenn sich diese zu einer "Art Quadrat" ergänzen und/oder "kreuzartig zueinander" angeordnet sind) gegebenenfalls eine in zwei voneinander verschiedene (insbesondere in zwei zueinander senkrecht stehende) Richtungen symmetriebrechende Messung ermöglichen, so dass diese in Abhängigkeit von der Definition einer "symmetriebrechend-winkelabhängigen Strahlungsdetektionsvorrichtung" im Sinne der vorliegenden Anmeldung als eine, aber auch als zwei "symmetriebrechend-winkelabhängige Strahlungsdetektionsvorrichtungen" zählen kann.

Weiterhin wird vorgeschlagen, dass bei der Richtungsbestimmungsvorrichtung die Strahlungsdetektionsvorrichtungen und/oder die länglich ausgebildeten Detektionsvolumen ein Szintillatormaterial aufweisen, welches bevorzugt ein Längen-zu-Breiten-Verhältnis von zumindest 5:1, bevorzugt 10:1, besonders bevorzugt 15:1, insbesondere 20:1 aufweist. Selbstverständlich sind auch andere Verhältnisse möglich, wie beispielsweise 2:1, 3:1, 4:1, 5:1, 6:1, 7:1, 8:1, 9:1, 10:1, 11:1, 12:1, 13:1, 14:1, 15:1, 16:1, 17:1, 18:1, 19:1, 20:1, 25:1, 30:1, 35:1 oder 40:1 (wobei die genannten Werte jeweils als Obergrenze und/oder Untergrenze eines offenen oder geschlossenen Intervalls dienen können). Als Szintillatormaterialien eignen sich in der Regel sämtliche bekannten Szintillatormaterialien, wie beispielsweise Csl (für Cäsiumiodid), Nal (für Natriumiodid), CeBr (Cerbromid), LaBr (Lanthanbromid), LSO (Lutetium-Strontium-Oxid), Plastik-Szintillatormaterialien (welche sich insbesondere für hohe Zählraten eignen) oder dergleichen (wobei gegebenenfalls auch geeignete Dotierungsmaterialien genutzt werden können). Die verwendeten Materialien richten sich insbesondere auch danach, welche ionisierende Strahlung nachgewiesen werden soll. Besonders relevant sind in diesem Zusammenhang Gammastrahlung und Neutronenstrahlung. Wobei selbstverständlich auch eine "Optimierung" auf andere ionisierende Strahlung denkbar ist, wie beispielsweise Protonenstrahlung, Elektronenstrahlung, Positronenstrahlung und dergleichen.

Weiterhin wird vorgeschlagen, dass zumindest eine Strahliungsdetektionsvorrichtung eine Messeinrichtung, vorzugsweise eine selbst-verstärkende Messeinrichtung, insbesondere eine Photomultipliereinrichtung aufweist, welche insbesondere nicht-ortsauflösend ausgebildet ist. Je nach zu verstärkender Strahlung können anstelle von Photomultipliern (SEV - Sekundärelektronenvervielfacher; Photonen werden selbst-verstärkend nachgewiesen) auch andere Einrichtungen verwendet werden, insbesondere solche, die andere nachzuweisende Teilchen verstärken (beispielsweise Elektronen - Channeltron und dergleichen). Derartige Messeinrichtungen eignen sich insbesondere im Zusammenhang mit Szintillatormaterialien, um die oftmals geringen "initialen" Messsignale zu verstärken, um diese beispielsweise weiter auf "elektrischem Wege" zu verstärken und/oder einer Datenverarbeitungseinrichtung zuzuführen. Ein Vorteil einer nicht-ortsauflösenden Ausbildung der entsprechenden Messeinrichtung besteht darin, dass diese typischerweise einfacher aufgebaut ist und dementsprechend auch kostengünstiger ist. Darüber hinaus können sich auch Vorteile hinsichtlich der Messgenauigkeit, der Messempfindlichkeit, der maximal erzielbaren Messrate, des Gewichts, der Kosten und der Messgeschwindigkeit (sodass schneller auswertbare Ergebnisse vorliegen) ergeben. Selbstverständlich ist es möglich, dass zusätzlich oder alternativ auch ortsauflösende Messeinrichtungen verwendet werden (insbesondere bei einem Teil der und/oder einem Typ von verwendeten Detektorvorrichtungen (insbesondere für symmetriebrechend-winkelabhängige Messvorrichtungen)).

Vorgeschlagen wird weiterhin, dass die Richtungsbestimmungsvorrichtung mit zumindest einer Datenverarbeitungseinrichtung versehen wird, welche derart ausgebildet und eingerichtet ist, dass sie durch einen Vergleich der Messwerte der Strahlungsdetektionsvorrichtungen, insbesondere deren Zählraten, die Richtung der Strahlungsquelle bestimmt, wobei vorzugsweise Messwerte aus einem bestimmten Energieintervall herangezogen werden. Hierdurch kann auf vorteilhafte Weise der Rauschuntergrund (teilweise) "abgezogen" bzw. verringert werden. Dies kann sich in einer erhöhten Genauigkeit der Messung und/oder einer Beschleunigung einer Richtungsmessung manifestieren. Die energetische Diskriminierung der Messwerte kann dabei auf beliebige Weise erfolgen, beispielsweise durch eine entsprechende Selektion der verwendeten Detektionsmaterialien (insbesondere dann, wenn bekannt ist, nach welcher Art von Strahlungsquelle gesucht wird), durch Justage eventueller Verstärkungseinrichtungen und/oder durch Nutzung "in einem ersten Schritt" gewonnener energieauflösender Daten (insbesondere im Zusammenhang mit der vorab vorgeschlagenen Ausbildungsweise). Man spricht in diesem Zusammenhang oftmals auch von einem "Energie-Gating". D.h., dass vorzugsweise in Abhängigkeit von einer ersten Analyse der gewonnenen Messwerte nur noch ein gewisses "Energiefenster" zur weiteren Messung verwendet (durchgelassen) wird, insbesondere um eine Richtungsbestimmung durchzuführen. Die "Energiefenster" sind dabei sinnvollerweise "energetisch auf die Strahlungsquelle zugeschnitten". In derartigen "Energiefenstern" haben die "echten Zählimpulse" anteilsmäßig gegenüber der Hintergrundstrahlung meist eine höhere Zählrate, als dies in sonstigen Energiebereichen der Fall ist. Hierdurch ist der Anteil der Hintergrundstrahlung relativ gesehen (meist deutlich) geringer.

Zusätzlich oder alternativ ist es auch möglich, die Richtungsbestimmungsvorrichtung derart auszubilden, dass diese zumindest eine Datenverarbeitungseinrichtung aufweist, welche derart ausgebildet und eingerichtet ist, dass sie insbesondere gesondert von und/oder zusätzlich zu einer Richtungsbestimmung mittels einer Bestimmung einer Energieverteilung zumindest eines Teils der gewonnenen Messwerte das Material der Strahlungsquelle bestimmt. Bei der Datenverarbeitungseinrichtung kann es sich um die gleiche wie vorab beschrieben handeln. Dementsprechend kann bei einem Teil der Detektorvorrichtungen (oder aber auch bei allen) eine Energieauflösung vorgesehen werden. Mithilfe einer energieauflösenden Messung ist es insbesondere möglich, dass Spektren aufgenommen werden können, sodass gegebenenfalls auch eine Aussage über die Art der Strahlungsquelle (beispielsweise können durch Vergleich mit gespeicherten spektroskopischen Daten Rückschlüsse auf das vorhandene Material gezogen werden) erfolgen kann. Es ist durchaus möglich, dass die betreffenden spektroskopischen Ergebnisse nach einer von der Richtungsbestimmung abweichenden Zeit vorliegen (insbesondere erst später). Dies ist jedoch nicht notwendigerweise nachteilig, da eine gesamte "Messkampagne" zum Auffinden einer Strahlungsquelle typischerweise eine Zeit in Anspruch nimmt, die länger als eine einzelne, reine Richtungsbestimmung ist. So ist beispielsweise oftmals eine Repositionierung der Detektorvorrichtung innerhalb der Richtungsbestimmungsvorrichtung, ein Repositionieren der Richtungsbestimmungsvorrichtung (Drehen, Bewegung auf die Strahlungsquelle hin), Zeit zum Kartieren des Signals und dergleichen vonnöten. Im Rahmen der derart "insgesamt erforderlichen Zeit" (oftmals in einem vergleichsweise geringen Teil dieser Zeit) liegen jedoch in der Regel auch bereits die spektroskopischen Daten vor und können dementsprechend angezeigt werden.

Die Datenverarbeitungseinrichtung kann neben den bereits vorgeschlagenen Aufgaben zusätzlich oder alternativ auch weitere Aufgaben übernehmen, wie insbesondere die Ermittlung einer Richtung, die Ausgabe eines Anzeigewerts, die Speicherung und Ausgabe von Messwerten (beispielsweise zur Erstellung einer Kartendarstellung und/oder zur Anzeige einer Kartendarstellung, zur Funkübertragung der gewonnen Daten an einen anderen Ort und dergleichen). Auch kann sie beispielsweise eine automatische Winkelveränderung der Detektionsvorrichtungen (beispielsweise relativ zueinander oder relativ zur Strahlungsquelle) usw. vornehmen. Auch Schnittstellen zu anderen elektronischen Komponenten können über diese erfolgen.

Weiterhin wird ein Verfahren gemäß Anspruch 11 zur Bestimmung der Richtung einer Strah-lungsquelle ionisierender Strahlung relativ zu einer Richtungsbestimmungsvorrichtung vorgeschlagen, bei dem aus den Messwerten der zumindest zwei Strahlungsdetektionsvorrichtungen, insbesondere aus deren Zählraten, die Richtung der Strahlungsquelle bestimmt wird, wobei für das vorgeschlagene Verfahren eine Richtungsbestimmungsvorrichtung vom vorab vorgeschlagenen Typ verwendet wird. Mit dem vorgeschlagenen Verfahren ist es möglich, die gleichen Eigenschaften und Vorteile wie mit der vorab vorgeschlagenen Vorrichtung zumindest in analoger Weise zu realisieren. Weiterhin kann das Verfahren im Sinne der vorigen Beschreibung weitergebildet werden, wobei sich die dort genannten Vorteile und Eigenschaften zumindest in analoger Weise ergeben können.

Im Folgenden wird die Erfindung anhand vorteilhafter Ausführungsbeispiele und unter Bezugnahme auf die beigefügte Zeichnung näher erläutert. Es zeigen:
- Fig. 1:: ein erstes Ausführungsbeispiel für einen Richtungsdetektor für Gammastrahlung in einer schematischen Draufsicht;
- Fig. 2:: ein zweites Ausführungsbeispiel für einen Richtungsdetektor für eine Gammaquelle in einer schematischen Draufsicht;
- Fig. 3:: Ausführungsbeispiele für symmetriebrechendwinkelabhängige Detektoren, jeweils in einer schematischen, perspektivischen Ansicht;
- Fig. 4:: ein beispielhaftes Histogramm für die Winkelabhängigkeit der Zählrate eines winkelabhängigen Detektors in Abhängigkeit von seiner Ausrichtung zu einer Strahlungsquelle, bei Vorhandensein von Untergrundstrahlung;
- Fig. 5:: die Zählraten der unterschiedlichen Detektoren des in Fig. 2 gezeigten Ausführungsbeispiels eines Richtungsdetektors;
- Fig. 6:: eine schematische Darstellung eines Verfahrens zur Bestimmung der Lage einer Strahlungsquelle.

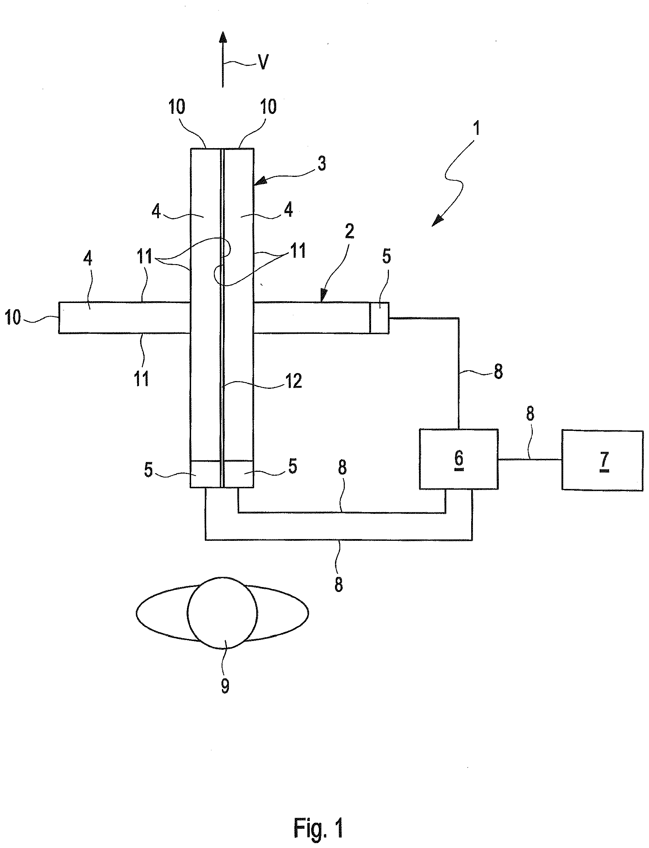

In Fig. 1 ist ein erstes Ausführungsbeispiel für einen Richtungsdetektor 1 in schematischer Draufsicht von oben dargestellt. Der Richtungsdetektor 1 weist einen besonders einfachen Aufbau auf, was unter anderem auch zu einem geringen Gewicht und zu einer niedrigen Stromaufnahme führt. Er eignet sich daher insbesondere auch für portable Anwendungen.

Der Richtungsdetektor 1 weist von seinem grundsätzlichen Aufbau her einen symmetrisch detektierenden Detektor 2 (symmetrisch-winkelabhängige Strahlungsdetektionsvorrichtung) und einen symmetriebrechend detektierenden Detektor 3 (symmetriebrechend-winkelabhängige Strahlungsdetektionsvorrichtung) auf.

Der symmetrisch detektierende Detektor 2 besteht dabei im Wesentlichen aus einem länglich geformten Szintillationskristall 4, wie beispielsweise einem Csl-Szintillationskristall (Cäsiumiodid-Szintillationskristall). An einer Seite der Szintillationskristalle 4 ist darüber hinaus jeweils ein Photomultiplier 5 (deutsch: Sekundärelektronenvervielfacher) angeordnet, welche im vorliegenden Fall nicht-ortsauflösend und nicht-energieauflösend ausgebildet sind. Die von den Photomultipliern 5 gemessenen Impulse werden einem Controller 6 zugeführt, der die Auswertung der gemessenen Daten übernimmt und die ausgewerteten Daten auf einem Anzeigedisplay 7 darstellt (im Folgenden noch näher beschrieben). Zur Übermittlung der erforderlichen Impulse dienen Datenleitungen 8, die unter anderem auch die Stromzufuhr der betreffenden Bauelemente sicherstellen (was vorliegend nicht näher dargestellt ist).

Der Vollständigkeit halber wird darauf hingewiesen, dass der symmetrisch detektierende Detektor 2 aufgrund des nur an einer Seite angeordneten Photomultipliers 5 und der damit einhergehenden Dämpfung bis zu einem gewissen Grad asymmetrisch (symmetriebrechend) misst. Da jedoch in Längsrichtung des Szintillationskristalls ohnehin nur sehr wenige Zählpulse registriert werden, ist dieser Effekt verhältnismäßig klein. Dies gilt insbesondere im Verhältnis zur "eigentlichen Winkelabhängigkeit", also einem Drehwinkel relativ zur Vorderseite (in Fig. 1 mit "V" bezeichneter Pfeil), welche entgegengesetzt zum schematisch eingezeichneten Bediener 9 liegt. Es wird darauf hingewiesen, dass gegebenenfalls auch der Bediener 9 entfallen kann bzw. sich an gegebenenfalls völlig unterschiedlicher Stelle befinden kann (beispielsweise bei einem stationären Einsatz, einem autonomen Fahrzeug oder dergleichen).

Die eigentliche Detektion von (vorliegend) Gammastrahlung erfolgt dadurch, dass die einfallende Gammastrahlung im symmetrisch detektierenden Detektor 2 Lichtblitze erzeugt, die vom Photomultiplier 5 empfangen werden und in ein verstärktes elektrisches Signal umgewandelt werden, das über die Datenleitung 8 zum Controller 6 geführt wird. In der in Fig. 1 eingezeichneten Lage wird eine maximale Zählstärke des symmetrisch detektierenden Detektors 2 gewonnen, wenn sich die Gammastrahlungsquelle im Bereich (genau) der Vorderseite des Richtungsdetektors 1 befindet. Befindet sich die Gammastrahlungsquelle dagegen (genau) rechts oder links vom Richtungsdetektor 1, so wird eine minimale Zählrate ermittelt. Für "zwischenliegende Winkel" ergibt sich ein entsprechend erhöhtes oder erniedrigtes Signal. Dieses Signal kann darüber hinaus noch von Untergrundstrahlung überlagert sein. Weiterhin ist in Fig.1 ein symmetriebrechend detektierender Detektor 3 vorgesehen, der um 90° versetzt zum symmetrisch detektierenden Detektor 2 angeordnet ist. Beide Detektoren, also symmetrisch detektierender Detektor 2 und symmetriebrechend detektierender Detektor 3, sind horizontal zur Erdoberfläche angeordnet.

Der symmetriebrechend detektierende Detektor 3 kann im Wesentlichen als Modul aus zwei nebeneinanderliegend angeordneten symmetrisch detektierenden Detektoren 2 aufgefasst werden (mechanisch kompakte Bauweise). Das heißt, es sind zwei Szintillationskristalle 4 jeweils an einer ihrer Längsseiten 11 aufeinandergelegt ("sandwichartiger Aufbau"). Ebenso weisen beide Szintillationskristalle 4 jeweils einen Photomultiplier 5 zur Verstärkung der in diesen erzeugten Lichtpulse auf. Grundsätzlich würden beide einzelnen Szintillationskristalle 4 bei einer Drehung nach links bzw. nach rechts (relativ zur Pfeilrichtung V) bei gleichen Winkeln jeweils gleiche Zählraten liefern (sofern die Gammaquelle in Pfeilrichtung V zu finden ist). Jedoch wird die Strahlung, die einen Lee-seitig (distal) zur Strahlungsquelle liegenden Szintillationskristall 4 erreicht durch den jeweils anderen, Luv-seitig (proximal) liegenden benachbarten Szintillationskristall 4 gedämpft, sodass dieser eine etwas schwächere Zählrate aufweist. Die Stärke dieses Effekts hängt dabei von der Dichte, der Größe und dem Material des Szintillationskristalls 4 ab. Um den Unterschied in der Zählrate zu erhöhen, ist im vorliegend dargestellten Ausführungsbeispiel zusätzlich eine dünne Schicht aus einem strahlungsabsorbierenden Material 12 angeordnet. Dieses kann beispielsweise aus einer dünnen Bleischicht oder dergleichen bestehen. Ein weiterer Vorteil eines derartigen strahlungsabsorbierenden Materials 12 ist, dass dieses typischerweise auch einen Übertritt von Zählpulsen (Lichtimpulsen) von einem Szintillationskristall 4 auf den dazu benachbarten Szintillationskristall 4 verhindert.

Aufgrund der symmetriebrechenden Gesamtwirkung des symmetriebrechend detektierenden Detektors 3 kann vorliegend vom Controller 6 unterschieden werden, ob sich eine Strahlungsquelle links oder rechts vom Richtungsdetektor 1 befindet. In Abhängigkeit vom Winkel zur Längsachse des symmetriebrechend detektierenden Detektors 3 wird sich darüber hinaus die Zählrate in den betreffenden Szintillationskristallen 4 ändern (entsprechendes gilt für den symmetrisch detektierenden Detektor 2).

Der Controller 6 kann nunmehr aus dem Verhältnis der beiden Zählraten aus den vorliegend insgesamt drei Szintillationskristallen 4 bzw. Photomultipliern 5 ermitteln, in welcher Winkellage sich eine Strahlungsquelle befindet, ob sich die Strahlungsquelle links oder rechts vom Richtungsdetektor 1 befindet und kann darüber hinaus auf die Stärke der Strahlungsquelle schließen. Da Hintergrundstrahlung zumindest im statistischen Mittel alle Szintillationskristalle 4 gleichartig trifft, kann der Effekt der Hintergrundstrahlung einfach "herausgerechnet werden", was entsprechend vorteilhaft ist.

Gemäß einer Modifikation der in Fig. 1 dargestellten Anordnung ist es darüber hinaus auch möglich, dass die Photomultiplier 5 energieselektiv detektieren können. Hierdurch ist es einerseits möglich, dass die gewonnenen Messsignale "gegatet" werden können. Das heißt, dass in Abhängigkeit von einer gegebenenfalls erkannten Strahlungsquelle das von dieser emittierte Energiespektrum (grob) erkannt werden kann (dabei ist es nicht erforderlich, dass das gesamte Spektrum aufgenommen wird, sondern es ist vielmehr in der Regel ausreichend, wenn der oder die stärksten Impulse berücksichtigt werden, unabhängig davon ob dies bereits eine Aussage auf die Art des die Strahlung emittierenden Materials ermöglicht oder nicht und nur beispielsweise die Energiebereiche mit erhöhter Zählrate vom Controller 6 bei der Richtungsbestimmung berücksichtigt werden). Hierdurch ist es üblicherweise möglich, die von der Hintergrundstrahlung herrührenden Störeffekte zu verringern, sodass die Güte der Richtungsbestimmung nochmals erhöht wird. Zusätzlich oder alternativ ist es aber auch möglich, dass eine energieauflösende Detektion der Messsignale dazu genutzt wird, dass das Spektrum der die Strahlung emittierenden Quelle ermittelt wird und so Rückschlüsse auf das die Strahlung emittierende Material möglich sind. Dabei ist es im Übrigen durchaus möglich, dass die Richtungserkennung (einschließlich des beschriebenen Gating-Vorgangs) und die Erkennung des Materials zu deutlich auseinanderliegenden Zeitpunkten erfolgt.

Weiterhin ist es durchaus auch denkbar, dass der Winkel zwischen den beiden Detektoren 2, 3 (symmetrisch detektierender Detektor 2 bzw. symmetriebrechend detektierender Detektor 3) veränderlich ausgeführt ist, was im folgenden Ausführungsbeispiel noch näher beschrieben wird.

Ergänzend wird ausgeführt, dass mit dem vorliegend dargestellten Richtungsdetektor 1 keine Aussage darüber möglich ist, ob sich die Strahlungsquelle vor oder hinter dem Richtungsdetektor 1 befindet. Darüber hinaus ist keine Aussage darüber möglich, ob sich die Strahlungsquelle oberhalb oder unterhalb der Ebene, die von den Detektoren 2, 3 aufgespannt wird, befindet. Für viele Messaufgaben ist dies jedoch nicht nachteilig, da meist davon ausgegangen werden kann, dass eine Bedienperson 9 einen "kritischen Bereich" ausgehend aus einem "sauberen Bereich" heraus betritt und darüber hinaus davon ausgegangen werden kann, dass eine Strahlungsquelle nicht "frei in der Luft fliegt" (innerhalb von Gebäuden kann sich dabei die Situation ändern). Im Übrigen ist es möglich, dass beispielsweise bei einer entsprechenden Programmierung des Controllers 6 auch diese Unsicherheiten dadurch aufgelöst werden können, dass der Bediener beispielsweise durch entsprechende Instruktionen über das Anzeigedisplay 7 oder automatisch den Richtungsdetektor 1 in unterschiedliche Richtungen dreht. Wenn der Richtungsdetektor 1 beispielsweise in der Zeichenebene um 90° gedreht wird, so kann eine Aussage dahingehend erfolgen, ob sich eine Strahlungsquelle vor oder hinter dem Richtungsdetektor 1 befindet (wobei keine Aussage mehr getroffen werden kann, ob die Strahlungsquelle nunmehr links oder rechts vom Richtungsdetektor 1 angeordnet ist). Diese Information kann sich jedoch der Controller 6 "merken", sodass sich schlussendlich eine "Gesamtinformation" ergibt. Dementsprechend kann eine Aussage "oben-unten" durch eine Rotation des Richtungsdetektors 1 um eine Achse längs zur Längsachse des symmetriebrechend detektierenden Detektors 3 realisiert werden.

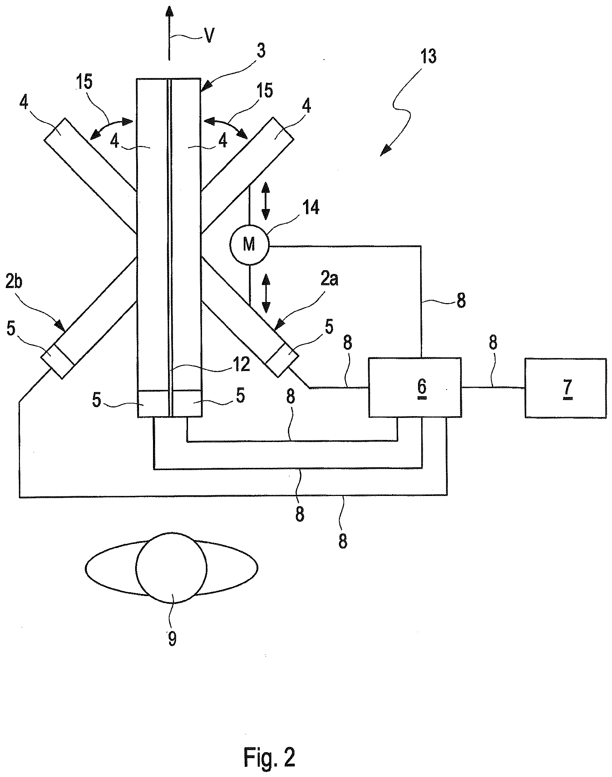

In Fig. 2 ist ein zweites bevorzugtes Ausführungsbeispiel für einen Richtungsdetektor 13 dargestellt, zu dem zur Durchführung von internen Versuchen auch bereits ein erster, gut funktionierender Demonstrator gebaut wurde.

Beim zweiten Ausführungsbeispiel eines Richtungsdetektors 13 ist parallel zur Längsachse des Richtungsdetektors 13 (parallel zum in Richtung Vorderseite zeigenden Pfeil "V") - analog zum in Fig. 1 dargestellten Richtungsdetektor 1 - ein symmetriebrechend detektierender Detektor 3 dargestellt, der einen im Wesentlichen identischen Aufbau zum vorab beschriebenen symmetriebrechend detektieren Detektor 3 aufweist.

Jedoch weist der vorliegende Richtungsdetektor 13 nunmehr zwei symmetrisch detektierende Detektoren 2a, 2b auf, die in einer Ausgangsposition (wie in Fig. 2 dargestellt) in einem 90°-Winkel zueinander angeordnet sind. Im Verhältnis zum symmetriebrechend detektierenden Detektor 3 sind die symmetrisch detektierenden Detektoren 2a, 2b jeweils (in einer Ausgangsposition) in einem Winkel von 45° relativ zu diesem angeordnet. Von ihrem Aufbau her ähneln die symmetrisch detektierenden Detektoren 2a, 2b dem symmetrisch detektierenden Detektor 2 gemäß dem ersten Ausführungsbeispiel eines Richtungsdetektors 1 (Fig. 1).

Erneut kann der Controller 6 aufgrund der unterschiedlichen Zählraten in den einzelnen Detektoren 2a, 2b, 3 auf die Lage eines Gammastrahlers schließen. Dies betrifft die Winkellage, eine Aussage dahingehend, ob sich der Gammastrahler links oder rechts vom Richtungsdetektor 13 befindet, jedoch nicht ohne weiteres dahingehend, ob sich der Gammastrahler vor oder hinter bzw. oberhalb oder unterhalb des Richtungsdetektors 13 befindet. Wie bereits erwähnt, kann dies jedoch durch eine entsprechende Rotation des Geräts 13 aufgelöst werden.

Aufgrund der insgesamt größeren Anzahl an Zählimpulsen (aufgrund der größeren Anzahl an Detektoren), ist die Messung bereits "ab initio" genauer, als dies beim Ausführungsbeispiel gemäß Fig. 1 der Fall ist.

Darüber hinaus ist es beim vorliegend dargestellten Ausführungsbeispiel eines Richtungsdetektors 13 auch möglich, dass der Winkel der beiden symmetrisch detektierenden Detektoren 2a, 2b zueinander verstellt werden kann (wobei die Verstellung vorzugsweise symmetrisch zum symmetriebrechend detektierenden Detektor 3 erfolgt). Hierzu ist im vorliegend dargestellten Ausführungsbeispiel ein Stellmotor 14 dargestellt, der automatisiert vom Controller 6 angesteuert wird. Selbstverständlich ist es auch möglich, dass beispielsweise eine "Handverstellung", beispielsweise nach einer entsprechenden Aufforderung im Anzeigedisplay 7, erfolgt. Gegebenenfalls kann auch ein Sensor die korrekte Lage der entsprechenden Detektoren 2a, 2b (gegebenenfalls auch 3) überwachen.

Durch die Verstellung ist es möglich, dass das Gesichtsfeld des Richtungsdetektors 13 vergrößert wird (wenn auch zu Lasten der relativen Auflösung). Umgedreht ist es aber auch möglich, dass die relative Auflösung des Richtungsdetektors 13 erhöht wird (wenn auch zu Lasten des Gesichtsfelds). Um einen Überblick zu erhalten, welche Steigerung der Genauigkeit hierdurch möglich ist, ist Tab. 1 angefügt. Bei dieser ist eine nummerische Simulation des Gesichtsfelds und der relativen Auflösung in Abhängigkeit vom Winkel 15 zwischen den betreffenden symmetrisch detektierenden Detektorelementen 2a, 2b und dem symmetriebrechend detektierenden Detektorelement 3 dargestellt.

**Tab.1**

| Winkel [Grad] | | Gesichtsfeld [Grad] | Rel. Auflösung [Impulse/Grad] |
|---|---|---|---|
| 2a | 2b | | |
| -20 | +20 | 40 | 55 |
| -30 | +30 | 60 | 48,3 |
| -45 | +45 | 90 | 40 |
| -60 | +60 | 180 | 32,5 |

Bei dem Demonstrator wurden Csl-Szintillationskristalle 4 mit einer Länge von 10 cm und einer (quadratischen) Stirnseitenfläche 10 von 1,8 cm x 1,8 cm verwendet. Die Gesamtabmessungen der Vorrichtung betrugen etwa 35 × 35 × 35 cm³ bei einem Gewicht von etwa 5 kg (einschließlich Hochleistungsakku), was zeigt, dass die Vorrichtung durchaus als portables Gerät zu verwenden ist. Bei nicht-abgeschirmten Strahlungsquellen mit einer- relativ geringen Quellenstärke - von 150 MBq betrug die Zeitdauer zum Erkennen, dass eine Strahlungsquelle vorhanden ist, bei einer Entfernung von etwa 20 m zur Strahlungsquelle weniger als 1s; die Richtungsbestimmung konnte in typischerweise weniger als 10 s erfolgen. Bei einer nicht-abgeschirmten Strahlungsquelle mit einer Quellenstärke von 1 MBq und einem Abstand von 3 m betrug die Zeitdauer zum Erkennen, dass eine Strahlungsquelle vorhanden ist, ebenfalls weniger als 1 s; auch hier konnte die Richtungsbestimmung typischerweise in weniger als 10 s erfolgen. Ein Erkennen eines Materials (durch Spektralanalyse) erforderte in beiden Fällen typischerweise etwa 30-60 s. Die Richtungsauflösung betrug etwa +/-3°.

Bei einer versuchsweise genutzten Strahlungsquelle von etwa 180 kBq ist nach wie vor eine Richtungserkennung (wenn auch mit erhöhten Zeitdauern von typischerweise im Bereich von etwa 1 Minute) möglich. Zum Vergleich: eine Strahlungsquelle mit 180 kBq in 3 m Abstand hat etwa das gleiche Strahlungsniveau wie die Hintergrundradioaktivität in Deutschland.

Die Versuche deuten an, dass die vorliegend vorgeschlagene Vorrichtung für Gammaquellen ab ca. 30 keV Energie geeignet ist.

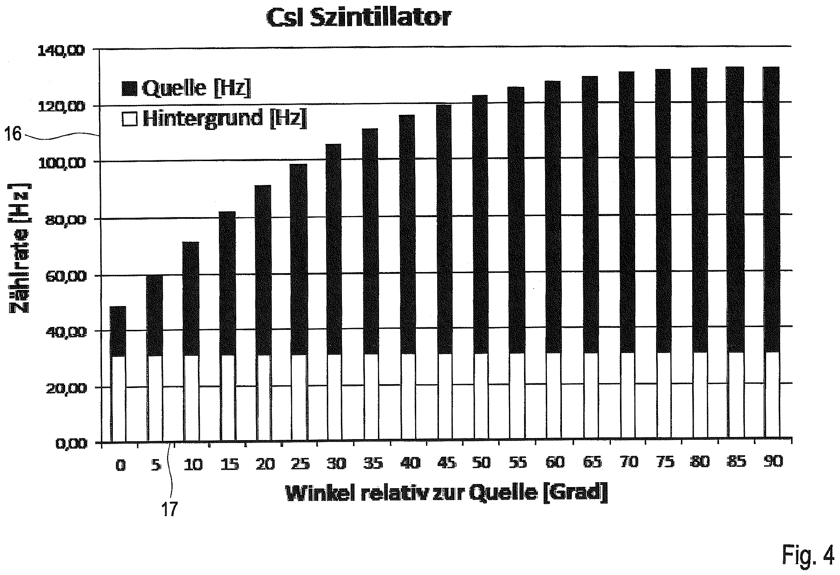

Zur Verdeutlichung der Charakteristika der beschriebenen Richtungsdetektoren 1, 13 (und weiterer zusätzlicher Bauausführungen), ist in Fig. 4 die "Empfangscharakteristik" eines einzelnen symmetrisch messenden Szintillationskristalls 4 bzw. eines symmetrisch detektierenden Detektors 2 dargestellt. In Abhängigkeit vom Winkel (0° heißt dabei, dass die Stirnseite 10 des Szintillationskristalls 4 direkt auf die Strahlungsquelle zeigt) ist auf der Ordinate 16 die Zählrate in Hertz in Abhängigkeit von unterschiedlichen Winkeln (längs der Abszisse 17 abgetragen) dargestellt. Das jeweilige Histogramm ist dabei in die Zählrate aufgrund der Quelle, sowie in die Zählrate infolge der Hintergrundstrahlung aufgeteilt. Die Hintergrundstrahlung ist (naturgemäß) unabhängig vom Winkel, wohingegen die Zählrate, welche auf der Strahlungsquelle basiert, sich mit dem Winkel stark ändert.

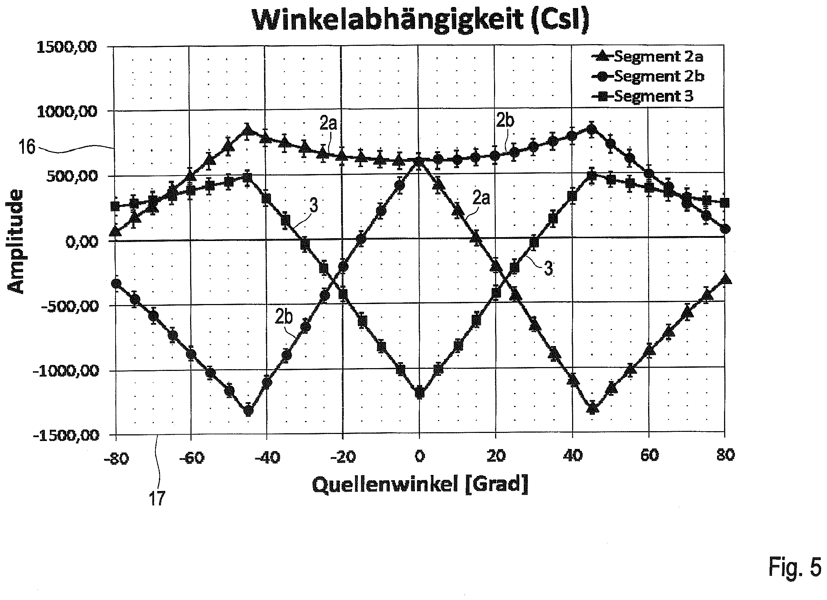

In Fig. 5 ist darüber hinaus zum Vergleich die relative Amplitude (in beliebigen Einheiten) der betreffenden Detektoren 2a, 2b, 3 (längs der Ordinate 16 abgetragen) in Abhängigkeit vom jeweiligen Winkel (längs der Abszisse 17 abgetragen) dargestellt (wobei die Detektoren 2a, 2b, 3 jeweils einzeln dargestellt sind). Die Basis hierfür bildet die in Fig. 2 dargestellte Anordnung des Richtungsdetektors. Um die Simulation zu vereinfachen wurde statt mit einem symmetriebrechend detektierenden Detektor 3 mit einem symmetrisch detektierenden Detektor (vom Typ 2, 2a oder 2b) gerechnet. Im Ergebnis entspricht dies (nach der Theorie) im Wesentlichen der Verwendung eines symmetriebrechend detektierenden Detektors 3, bei dem die Gesamtzählrate dargestellt ist (also keine "Aufschlüsselung" nach "linker Detektorhälfte" und "rechter Detektorhälfte").

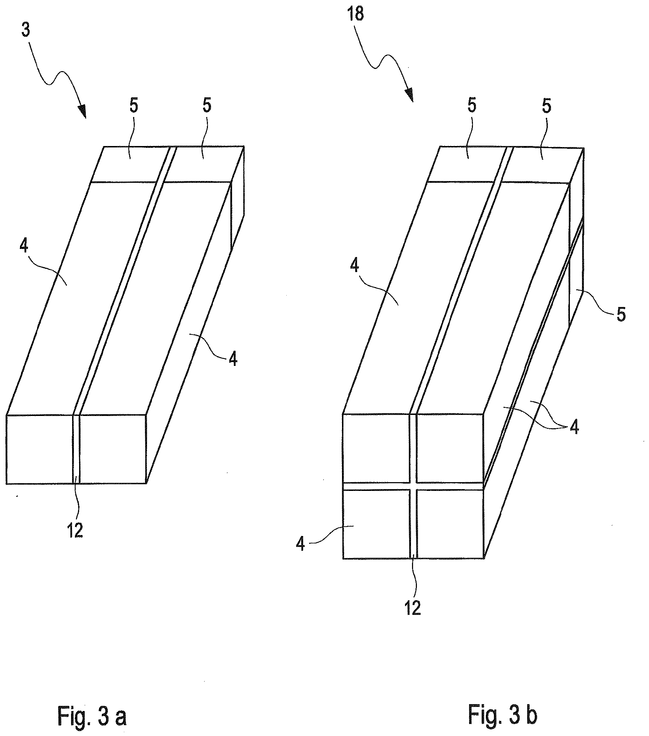

In Fig. 3 sind darüber hinaus unterschiedliche Bauformen von symmetriebrechend detektierenden Detektoren, jeweils in einer schematischen Perspektivanordnung dargestellt.

In Fig. 3a ist der auch bei den Ausführungsbeispielen gemäß Fig. 1 und Fig. 2 genutzte symmetriebrechend detektierende Detektor 3 dargestellt. Dieser weist zwei (gegebenenfalls unter Zwischenschaltung eines strahlungsabsorbierenden Materials 12) voneinander strahlungstechnisch separierte Szintillationskristalle 4 auf. Möglich ist es natürlich auch, dass - wie in Fig. 3b dargestellt - auch vier (gegebenenfalls jeweils unter Zwischenschaltung eines strahlungsabsorbierenden Materials 12) voneinander strahlungstechnisch separierte Szintillationskristalle 4 einen symmetriebrechend detektierenden Detektor 18 ausbilden. Hierdurch können zusätzliche Aussagen über die Lage der Strahlungsquelle getroffen werden. Insbesondere bei einem symmetriebrechend detektierenden Detektor 18 ist auch eine "senkrecht zur Messebene stehende" Anordnung des symmetriebrechend detektierenden Detektors 18 möglich, da hierdurch eine gleichzeitige Aussage zu vorne-hinten und links-rechts möglich wird (nicht jedoch oben-unten).

Der Ergänzung halber sollte noch erwähnt werden, dass die einzelnen Szintillationskristalle 4 der symmetriebrechend detektierenden Detektoren 3, 18 (und sonstiger Bauausführungen) zwar strahlungstechnisch voneinander separiert sind, im Allgemeinen jedoch eine mechanisch kompakte Einheit ausbilden.

Darüber hinaus ist es auch möglich, dass die symmetriebrechend detektierenden Detektoren 3 eine im Verhältnis zu den symmetrisch detektierenden Detektoren 2 verkürzte Länge aufweisen. Dies kann auch nur für einen Teil der in einem symmetriebrechend detektierenden Detektor 3 verbauten Szintillationskristalle 4 gelten. Dadurch "konzentrieren sich diese" auf die ihnen "zugewiesene" Aufgabe des Symmetriebrechens. Eine derartige Bauausführung kann Gewicht und Bauraum einsparen und gegebenenfalls auch den Energiebedarf mindern.

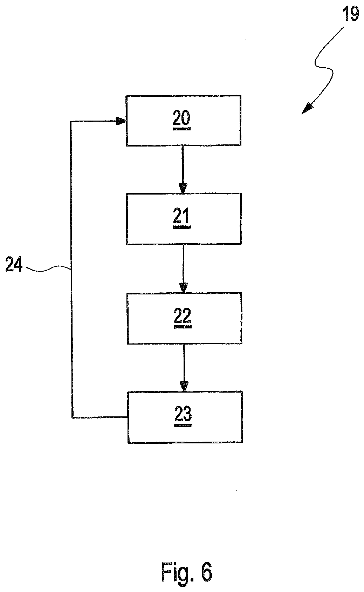

In Fig. 6 ist schließlich noch im Rahmen eines Flussdiagramms 19 ein Verfahren zur Bestimmung der Richtung einer Strahlungsquelle ionisierender Strahlung skizziert.

In einem ersten Schritt 20 werden die Zählraten der unterschiedlichen Detektoren (insbesondere symmetrisch detektierende Detektoren 2, 2a, 2b und symmetriebrechend detektierende Detektoren 3) gemessen. Anschließend wird in einem weiteren Schritt 21 basierend auf den einzelnen Messergebnissen der Strahlungshintergrund "abgezogen" und aus den verbliebenen "optimierten" Messdaten die Richtung der Strahlungsquelle ermittelt (gegebenenfalls parallel hierzu auch einschließlich eines Energie-Gatings und/oder einer spektroskopischen Analyse).

Anschließend werden die bereits verfügbaren Ergebnisse in einem Anzeigeschritt 22 dargestellt (beispielsweise auf einem Anzeigedisplay 7 angezeigt oder über Datenschnittstellen ausgegeben).

Der Anzeigeschritt 22 kann (optional) auch um einen Optimierungsschritt 23 ergänzt werden. Bei diesem Optimierungsschritt 23 kann beispielsweise der Benutzer zu bestimmten Handlungen aufgefordert werden, wie beispielsweise zu einer Drehung des Geräts. Auch kann er dazu aufgefordert werden die Winkellage einzelner Detektoren (beispielsweise symmetrisch detektierende Detektoren 2a, 2b beim Richtungsdetektor 13 gemäß zweitem Ausführungsbeispiel) zu verändern, um so beispielsweise die Messgenauigkeit zu erhöhen. Es ist im Übrigen auch möglich, dass Teile dieser Optimierung automatisiert erfolgen und selbsttätig ohne Benutzereingriff erfolgen.

Anschließend springt das Verfahren zurück 24, sodass erneut eine Zählratenmessung 20 durchgeführt wird.

Insbesondere in einem Fall, in dem noch nicht genügend Daten gesammelt wurden ist es auch möglich, dass der Optimierungsschritt 23 gewissermaßen als "leerer Verfahrensschritt" durchgeführt wird, mithin keine interne Verstellung innerhalb der Vorrichtung und/oder kein Benutzerkommando ausgegeben wird.

### Bezugszeichenliste:

- 1.: Richtungsdetektor
- 2.: Symmetrisch detektierender Detektor
- 3.: Symmetriebrechend detektierender Detektor
- 4.: Szintillationskristall
- 5.: Photomultiplier
- 6.: Controller
- 7.: Anzeigedisplay
- 8.: Datenleitung
- 9.: Bediener
- 10.: Stirnseite
- 11.: Längsseite
- 12.: Strahlungsabsorbierendes Material
- 13.: Richtungsdetektion
- 14.: Stellmotor
- 15.: Winkel
- 16.: Ordinate
- 17.: Abszisse
- 18.: Symmetriebrechend detektierender Detektor
- 19.: Flussdiagramm
- 20.: Zählratenmessung
- 21.: Richtungsbestimmung
- 22.: Anzeigeschritt
- 23.: Optimierungsschritt
- 24.: Rücksprung

## Patentansprüche

1. Richtungsbestimmungsvorrichtung (1, 13) zur Bestimmung der Richtung einer Strahlungsquelle ionisierender Strahlung relativ zur Richtungsbestimmungsvorrichtung (1, 13), aufweisend zumindest zwei Strahlungsdetektionsvorrichtungen (2, 2a, 2b, 3, 18) mit länglich ausgebildetem Detektionsvolumen (4), wobei die zumindest zwei Strahlungsdetektionsvorrichtungen (2, 2a, 2b, 3, 18) in einem Winkel zueinander angeordnet sind, wobei zumindest eine erste Strahlungsdetektionsvorrichtung als symmetrischwinkelabhängige Strahlungsdetektionsvorrichtung (2, 2a, 2b) ausgebildet ist, **dadurch gekennzeichnet, dass** zumindest eine zweite Strahlungsdetektionsvorrichtung als symmetriebrechend-winkelabhängige Strahlungsdetektionsvorrichtung (3, 18) ausgebildet ist.

2. Richtungsbestimmungsvorrichtung (1, 13) nach Anspruch 1, **dadurch gekennzeichnet, dass** die zumindest zwei Strahlungsdetektionsvorrichtungen (2a, 2b, 3) winkelvariabel (15) zueinander angeordnet sind, insbesondere manuell verstellbar und/oder automatisch verstellbar (14).

3. Richtungsbestimmungsvorrichtung (1, 13) nach Anspruch 1 oder 2, **dadurch gekennzeichnet, dass** genau zwei symmetrisch-winkelabhängige Strahlungsdetektionsvorrichtungen (2, 2a, 2b) und/oder genau eine oder zwei symmetriebrechend-winkelabhängige Strahlungsdetektionsvorrichtungen (3, 18) vorhanden sind, insbesondere pro Detektionsebene.

4. Richtungsbestimmungsvorrichtung (1, 13) nach einem der vorangehenden Ansprüche, **dadurch gekennzeichnet, dass** die Richtungsbestimmungsvorrichtung zumindest zwei symmetrisch-winkelabhängige Strahlungsdetektionsvorrichtungen (2a, 2b) aufweist, die symmetrisch, insbesondere spiegelsymmetrisch und/oder achsensymmetrisch und/oder punktsymmetrisch zu der zumindest einen symmetriebrechend-winkelabhängigen Strahlungsdetektionsvorrichtung (3) angeordnet sind.

5. Richtungsbestimmungsvorrichtung (1, 13) nach einem der vorangehenden Ansprüche, **dadurch gekennzeichnet, dass** die symmetriebrechend-winkelabhängige Strahlungsdetektionsvorrichtung (3, 18) als Anordnung parallel zueinander angeordneter länglich ausgebildeter Detektionsvolumen (4) ausgebildet ist, insbesondere von zwei oder vier parallel zueinander angeordneten länglich ausgebildeten Detektionsvolumen (4), welche insbesondere mittels zumindest einer Abschirmungseinrichtung (12) strahlungstechnisch voneinander separiert sind.

6. Richtungsbestimmungsvorrichtung (1, 13) nach einem der vorangehenden Ansprüche, **dadurch gekennzeichnet, dass** die Strahlungsdetektionsvorrichtungen (2, 2a, 2b, 3, 18) und/oder länglich ausgebildeten Detektionsvolumen (4) ein Szintillatormaterial (4) aufweisen, welches bevorzugt ein Längen-zu-Breiten-Verhältnis von zumindest 5:1, bevorzugt 10:1, besonders bevorzugt 15:1, insbesondere 20:1 aufweist.

7. Richtungsbestimmungsvorrichtung (1, 13) nach einem der vorangehenden Ansprüche, **dadurch gekennzeichnet, dass** zumindest eine Strahlungsdetektionsvorrichtung (2, 2a, 2b, 3, 18) eine Messeinrichtung, vorzugsweise eine selbst-verstärkende Messeinrichtung, insbesondere eine Photomultipliereinrichtung (5) aufweist, welche insbesondere nicht-ortsauflösend ausgebildet ist.

8. Richtungsbestimmungsvorrichtung (1, 13) nach einem der vorangehenden Ansprüche, **dadurch gekennzeichnet, dass** zumindest eine Strahlungsdetektionsvorrichtung (2, 2a, 2b, 3, 18) und/oder ein Teil der Strahlungsdetektionsvorrichtungen (2, 2a, 2b, 3, 18) der Richtungsbestimmungsvorrichtung (1, 13), energieauflösend ausgebildet sind.

9. Richtungsbestimmungsvorrichtung (1, 13) nach einem der vorangehenden Ansprüche, insbesondere nach Anspruch 8, **gekennzeichnet durch** zumindest eine Datenverarbeitungseinrichtung (6), welche derart ausgebildet und eingerichtet ist, dass sie durch einen Vergleich der Messwerte der Strahlungsdetektionsvorrichtungen (2, 2a, 2b, 3, 18), insbesondere deren Zählraten, die Richtung der Strahlungsquelle bestimmt, wobei vorzugsweise Messwerte aus einem bestimmten Energieintervall herangezogen werden.

10. Richtungsbestimmungsvorrichtung (1, 13) nach einem der vorangehenden Ansprüche, insbesondere nach Anspruch 8 oder 9, **gekennzeichnet durch** zumindest eine Datenverarbeitungseinrichtung (6), welche derart ausgebildet und eingerichtet ist, dass sie insbesondere gesondert von und/oder zusätzlich zu einer Richtungsbestimmung mittels einer Bestimmung einer Energieverteilung zumindest eines Teils der gewonnenen Messwerte das Material der Strahlungsquelle bestimmt.

11. Verfahren (19) zur Bestimmung der Richtung einer Strahlungsquelle ionisierender Strahlung relativ zu einer Richtungsbestimmungsvorrichtung (1, 13) unter Verwendung einer Vorrichtung nach einem der Ansprüche 1 bis 10, wobei aus den Messwerten der zumindest zwei Strahlungsdetektionsvorrichtungen (2, 2a, 2b, 3, 18), insbesondere aus deren Zählraten, die Richtung der Strahlungsquelle bestimmt wird.

## Claims

1. Direction-determining device (1, 13) for determining the direction of a radiation source of ionizing radiation relative to said direction-determining device (1, 13), having at least two radiation detection devices (2, 2a, 2b, 3, 18) with detection volume (4) of elongated design, the at least two radiation detection devices (2, 2a, 2b, 3, 18) being arranged at an angle to one another, **wherein** at least one first radiation detection device is designed as a symmetrical angle-dependent radiation detection device (2, 2a, 2b), **characterized in that** at least one second radiation detection device is designed as a symmetry-breaking angle-dependent radiation detection device (3, 18).

2. Direction-determining device (1, 13) according to claim 1, **characterized in that** the at least two radiation detection devices (2a, 2b, 3) are arranged angle-variable (15) to one another, in particular manually adjustable and/or automatically adjustable (14).

3. Direction-determining device (1, 13) according to claim 1 or 2, **characterized in that** precisely two symmetrical angle-dependent radiation detection devices (2, 2a, 2b) and/or precisely one or two symmetry-breaking angle-dependent radiation detection devices (3, 18) are provided, in particular per detection plane.

4. Direction-determining device (1, 13) according to one of the preceding claims, **characterized in that** the direction-determining device has at least two symmetrical angle-dependent radiation detection devices (2a, 2b), which are arranged symmetrical, in particular mirror-symmetrical and/or axis-symmetrical and/or point-symmetrical, relative to the at least one symmetry-breaking angle-dependent radiation detection device (3).

5. Direction-determining device (1, 13) according to one of the preceding claims, **characterized in that** the symmetry-breaking angle-dependent radiation detection device (3, 18) is designed as an arrangement of detection volumes (4) of elongated design arranged parallel to one another, in particular of two or four detection volumes (4) of elongated design arranged parallel to one another, which are separated from one another in respect of radiation in particular by means of at least one shielding device (12).

6. Direction-determining device (1, 13) according to one of the preceding claims, **characterized in that** the radiation detection devices (2, 2a, 2b, 3, 18) and/or detection volumes (4) of elongated design have a scintillator material (4) which preferably has a length-to-width ratio of at least 5:1, preferably 10:1, particularly preferably 15:1, in particular 20:1.

7. Direction-determining device (1, 13) according to one of the preceding claims, **characterized in that** at least one radiation detection device (2, 2a, 2b, 3, 18) has a measuring unit, preferably a self-amplifying measuring unit, in particular a photomultiplier unit (5) which is designed in particular non-spatially-resolving.

8. Direction-determining device (1, 13) according to one of the preceding claims, **characterized in that** at least one radiation detection device (2, 2a, 2b, 3, 18) and/or part of the radiation detection devices (2, 2a, 2b, 3, 18) of the direction-determining device (1, 13), are designed energy-resolving.

9. Direction-determining device (1, 13) according to one of the preceding claims, in particular according to claim 8, **characterized by** at least one data processing unit (6) which is designed and configured such that it determines the direction of the radiation source by a comparison of the measured values of the radiation detection devices (2, 2a, 2b, 3, 18), in particular of their count rates, wherein measured values from a defined energy interval are preferably applied.

10. Direction-determining device (1, 13) according to one of the preceding claims, in particular according to claim 8 or 9, **characterized by** at least one data processing unit (6) which is designed and configured such that it determines the material of the radiation source in particular separately from and/or additionally to a direction determination by means of determining an energy distribution of at least part of the obtained measured values.

11. Method (19) for determining the direction of a radiation source of ionizing radiation relative to a direction-determining device (1, 13) using a device according to one of claims 1 to 10, wherein the direction of the radiation source is determined from the measured values of the at least two radiation detection devices (2, 2a, 2b, 3, 18), in particular from their count rates.

## Revendications

1. Dispositif de détermination de direction (1, 13) destiné à déterminer la direction d'une source de rayonnement ionisant par rapport au dispositif de détermination de direction (1, 13), présentant au moins deux dispositifs de détection de rayonnement (2, 2a, 2b, 3, 18) avec volume de détection constitué en longueur (4), sachant que lesdits au moins deux dispositifs de détection de rayonnement (2, 2a, 2b, 3, 18) sont disposés à un certain angle l'un par rapport à l'autre, sachant qu'au moins un premier dispositif de détection de rayonnement est conçu sous forme de dispositif de détection de rayonnement symétriquement dépendant de l'angle (2, 2a, 2b), **caractérisé en ce qu'**au moins un deuxième dispositif de détection de rayonnement est conçu sous forme de détection de rayonnement à brisure de symétrie dépendant de l'angle (3, 18).

2. Dispositif de détermination de direction (1, 13) selon la revendication 1, **caractérisé en ce que** lesdits au moins deux dispositifs de détection de rayonnement (2a, 2b, 3) sont disposés l'un par rapport à l'autre selon un angle variable (15), notamment variable manuellement et/ou automatiquement (14).

3. Dispositif de détermination de direction (1, 13) selon la revendication 1 ou 2, **caractérisé en ce qu'**exactement deux dispositifs de détection de rayonnement symétriquement dépendants de l'angle (2, 2a, 2b) et/ou exactement un ou deux dispositifs de détection de rayonnement à brisure de symétrie dépendants de l'angle (3, 18) sont présents, notamment pour chaque plan de détection.

4. Dispositif de détermination de direction (1, 13) selon une des revendications précédentes, **caractérisé en ce que** le dispositif de détermination de direction présente au moins deux dispositifs de détection de rayonnement symétriquement dépendants de l'angle (2a, 2b) qui sont disposés symétriquement, notamment selon une symétrie spéculaire et/ou une symétrie axiale et/ou une symétrie ponctuelle par rapport audit au moins un dispositif de détection de rayonnement à brisure de symétrie dépendant de l'angle (3).

5. Dispositif de détermination de direction (1, 13) selon une des revendications précédentes, **caractérisé en ce que** le dispositif de détection de rayonnement à brisure de symétrie dépendant de l'angle (3, 18) est conçu sous forme d'arrangement de volumes de détection (4) constitués en longueur, disposés parallèlement les uns par rapport aux autres, notamment de deux ou de quatre volumes de détection (4) conçus en longueur, disposés parallèlement les uns par rapport aux autres, qui sont notamment séparés radiométriquement les uns des autres notamment au moyen d'un dispositif de blindage (12).

6. Dispositif de détermination de direction (1, 13) selon une des revendications précédentes, **caractérisé en ce que** les dispositifs de détection de rayonnement (2, 2a, 2b, 3, 18) et/ou volumes de détection (4) constitués en longueur présentent un matériau scintillateur (4) qui présente de préférence un rapport longueur-largeur d'au moins 5:1, de préférence 10:1, en particulier de préférence 15:1, notamment 20:1.

7. Dispositif de détermination de direction (1, 13) selon une des revendications précédentes, **caractérisé en ce qu'**au moins un dispositif de détection de rayonnement (2, 2a, 2b, 3, 18) présente un dispositif de mesure, de préférence un dispositif de mesure s'auto-amplifiant, notamment un photomultiplicateur (5) qui est conçu sans résolution locale.

8. Dispositif de détermination de direction (1, 13) selon une des revendications précédentes, **caractérisé en ce qu'**au moins un dispositif de détection de rayonnement (2, 2a, 2b, 3, 18) et/ou une partie des dispositifs de détection de rayonnement (2, 2a, 2b, 3, 18) du dispositif de détermination de direction (1, 13) sont conçus à résolution énergétique.

9. Dispositif de détermination de direction (1, 13) selon une des revendications précédentes, notamment selon la revendication 8, **caractérisé par** au moins un dispositif de traitement des données (6) qui est conçu et configuré de sorte à déterminer la direction de la source de rayonnement par le biais d'une comparaison des valeurs mesurées des dispositifs de détection du rayonnement (2, 2a, 2b, 3, 18), notamment de leurs taux de comptage, sachant que sont utilisées de préférence des valeurs mesurées dans un intervalle d'énergie donné.

10. Dispositif de détermination de direction (1, 13) selon une des revendications précédentes, notamment selon la revendication 8 ou 9, caractérisé en au moins un dispositif de traitement des données (6) qui est conçu et configuré de sorte à déterminer le matériau de la source de rayonnement au moyen d'une détermination d'une répartition d'énergie d'au moins une partie des valeurs mesurées acquises, notamment indépendamment d'une détermination de la direction et/ou en plus d'une détermination de la direction.

11. Procédé (19) destiné à déterminer la direction d'une source d'un rayonnement ionisant par rapport à un dispositif de détermination de direction (1, 13) en utilisant un dispositif selon une des revendications 1 à 10, sachant que la direction de la source de rayonnement est déterminée à partir des valeurs mesurées d'au moins deux dispositifs de détection de rayonnement (2, 2a, 2b, 3, 18), notamment de leurs taux de comptage.
